(19) Europäisches Patentamt
European Patent Office
Office européen des brevets

(11) **EP 4 398 348 A1**

(12) **EUROPEAN PATENT APPLICATION**
published in accordance with Art. 153(4) EPC

(43) Date of publication:
**10.07.2024 Bulletin 2024/28**

(21) Application number: **22941099.8**

(22) Date of filing: **11.05.2022**

(51) International Patent Classification (IPC):
*H01M 4/62* (2006.01)   *H01M 10/0567* (2010.01)
*H01M 10/0525* (2010.01)

(52) Cooperative Patent Classification (CPC):
**H01M 4/62; H01M 10/0525; H01M 10/0567;**
Y02E 60/10

(86) International application number:
**PCT/CN2022/092216**

(87) International publication number:
**WO 2023/216139 (16.11.2023 Gazette 2023/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde City, Fujian 352100 (CN)**

(72) Inventors:
• **XU, Ningbo
  Ningde City, Fujian 352100 (CN)**
• **ZOU, Hailin
  Ningde City, Fujian 352100 (CN)**
• **CHEN, Peipei
  Ningde City, Fujian 352100 (CN)**

(74) Representative: **Frick, Robert
Lorenz Seidler Gossel
Rechtsanwälte Patentanwälte
Partnerschaft mbB
Widenmayerstraße 23
80538 München (DE)**

(54) **SECONDARY BATTERY AND MANUFACTURING METHOD THEREFOR, BATTERY MODULE, BATTERY PACK AND ELECTRICAL DEVICE**

(57)   The present disclosure provides a secondary battery, which includes a negative electrode plate including a negative electrode material layer, a positive electrode plate including a positive electrode material layer, and an electrolytic solution. At least one of the negative electrode material layer, the positive electrode material layer and the electrolytic solution contains an interface passivator, and the interface passivator is a compound containing an element E selected from lithium, sodium, beryllium, magnesium, potassium, calcium, aluminum, gallium, or germanium. The present disclosure also relates to a preparation method of a secondary battery and a battery module, a battery pack, and a powered device including the secondary battery. The secondary battery of the present disclosure has improved resistance and balanced cyclic performance and storage performance.

**EP 4 398 348 A1**

**Description**

**TECHNICAL FIELD**

The present disclosure relates to the technical field of lithium batteries, and more particularly, to a secondary battery and a preparation method thereof, and a battery module, a battery pack, and a powered device including the secondary battery.

**BACKGROUND**

With the wide application of electric vehicles (EVs) and hybrid electric vehicles (HEVs), people pay more attention to the service time and use cost of vehicles. Therefore, the cycle life of the secondary battery, which is an energy storage device for vehicles, naturally becomes one of the performance concerned in the field. It is desirable that the secondary battery has good cycle performance and long battery life. This not only reduces the use cost of the user, but also means less resource consumption.

The prior art cannot effectively improve the cycle performance of the secondary battery, and also has difficulty in achieving a balance between the cycle performance and the storage performance. Accordingly, there is a need in this field for a secondary battery having improved cycling and storage performance and a preparation method thereof.

**SUMMARY**

The present disclosure has been made in view of the above problems, and an object thereof is to provide a secondary battery having improved cycling and storage performance and a preparation method thereof.

In order to achieve the above object, the present disclosure provides a secondary battery and a preparation method thereof, a battery module, a battery pack, and a powered device.

A first aspect of the present disclosure provides a secondary battery, which includes a negative electrode plate including a negative electrode material layer, a positive electrode plate including a positive electrode material layer, and an electrolytic solution. At least one of the negative electrode material layer, the positive electrode material layer and the electrolytic solution contains an interface passivator, the interface passivator is a compound containing an element E, and the element E is selected from lithium, sodium, beryllium, magnesium, potassium, calcium, aluminum, gallium, or germanium. The interface passivator is provided such that the secondary battery can has a beneficial ternary layer on a surface of the negative electrode material layer.

In an embodiment, a surface of the negative electrode material layer is provided with an A-D-E ternary layer, where A is selected from alkali metal elements and is different from E, and D is silicon or carbon. The A-D-E ternary layer is formed by a reaction of the interface passivator on the surface of the negative electrode material layer during at least one charging of the secondary battery. The ternary passivation layer is provided on the surface of the negative electrode material layer, such that the secondary battery of the present disclosure can significantly reduce the battery impedance and improve cycle life and storage performance of the battery.

In an embodiment, the interface passivator is selected from at least one of compounds of beryllium, magnesium, calcium, aluminum, or gallium. Optionally, the interface passivator is selected from at least one of compounds of beryllium, magnesium, calcium, or aluminium. The compounds containing the above metal elements are selected to further improve the stabilizing effect of the ternary layer, thereby more effectively improving the performance of the secondary battery.

In an embodiment, the interface passivator is selected from at least one of: a substituted or unsubstituted $C_{1-20}$ carboxylic acid salt, the substituent being selected from one or more of $C_{1-6}$ alkyl, $C_{2-6}$ cycloalkyl, hydroxyl, amino, oxo group, acyl, $C_{1-6}$ alkylthio, phenyl, benzoylthio, phenylthio, and phenoxy; imino acid salt; enoate; phosphate; sulfate; sulfonimide salt; sulfonate; benzoate; phthalate; acetylacetonate; inorganic oxyacid salt; or double salt containing at least two of cations of E. The selection of the above compounds as the interface passivator can more effectively improve the resistance, cycle life, and storage performance of the secondary battery.

In an embodiment, the interface passivator is blended into at least one of the positive electrode material layer, the negative electrode material layer, or the electrolytic solution. The performance of the secondary battery can be effectively improved by adding the interface passivator to the positive and negative electrode materials and the electrolytic solution in a blending manner.

In an embodiment, the A-D-E ternary layer is selected from the group consisting of Li-Si-Ca ternary layer, Li-Si-Mg ternary layer, Li-Si-Be ternary layer, Li-Si-Al ternary layer, Li-C-Ca ternary layer, Li-C-Mg ternary layer, Li-C-Be ternary layer, Li-C-Al ternary layer, Na-Si-Ca ternary layer, Na-Si-Mg ternary layer, Na-Si-Be ternary layer, Na-Si-Al ternary layer, Na-C-Ca ternary layer, Na-C-Mg ternary layer, Na-C-Be ternary layer, Na-C-Al ternary layer and combinations thereof. Optionally, the A-D-E ternary layer is selected from the group consisting of Li-Si-Ca ternary layer, Li-Si-Mg ternary layer, Li-Si-Be ternary layer, Li-Si-Al ternary layer, Na-Si-Ca ternary layer, Na-Si-Mg ternary layer, Na-Si-Be ternary layer, Na-Si-Al ternary layer and combinations thereof. The above ternary layer is provided in the secondary battery to effectively improve battery impedance, cycle life, and storage performance.

In an embodiment, before the at least one charging, the positive electrode material layer contains the interface passivator of 0.001 wt% to 20 wt%, optionally 1 wt% to 10 wt%, based on a total weight of the positive electrode material layer.

In an embodiment, before the at least one charging, the negative electrode material layer contains the interface passivator of 0.001 wt% to 20 wt%, optionally 0.05 wt% to 5 wt%, based on a total weight of the negative electrode material layer.

In an embodiment, before the at least one charging, the electrolytic solution contains the interface passivator of 0.001 wt% to 20 wt%, optionally 0.1 wt% to 5 wt%, based on a total weight of the electrolytic solution.

The battery performance can be further improved by controlling the content of the passivator within the above range.

In an embodiment, the negative electrode material layer includes a negative electrode active material with D50 of 1 $\mu$m to 20 $\mu$m, optionally 1 $\mu$m to 10 $\mu$m. With the negative electrode active material having the above D50, the function of the ternary interface passivation layer of the present disclosure can be effectively exerted, and the performance of the secondary battery can be significantly improved.

In an embodiment, the negative electrode material layer includes a negative electrode active material with a Span value of 0.9 to 1.8, optionally 0.9 to 1.2,

wherein

$$Span = \frac{D90-D10}{D50}$$ ,

D90, D10 and D50 denote corresponding particle sizes at cumulative distribution percentages of 90%, 10%, and 50%, respectively. The negative electrode active material having the Span value within the above range is selected such that the material has the relative interface stability, which contributes to the achievement of the battery performance improvement effect.

A second aspect of the present disclosure provides a secondary battery prepared by steps of:

i) providing a negative electrode plate including a negative electrode material layer, a positive electrode plate including a positive electrode material layer, and an electrolytic solution to produce an uncycled secondary battery, at least one of the negative electrode material layer, the positive electrode material layer and the electrolytic solution containing an interface passivator, the interface passivator being a compound inlcuding an element E, and the element E being selected from lithium, sodium, beryllium, magnesium, potassium, calcium, aluminum, gallium, or germanium; and

ii) performing at least one cycle of charging and discharging on the uncycled secondary battery.

A third aspect of the present disclosure provides a preparation method of a secondary battery, which includes steps of:

i) providing a negative electrode plate including a negative electrode material layer, a positive electrode plate including a positive electrode material layer, and an electrolytic solution to produce an uncycled secondary battery, at least one of the negative electrode material layer, the positive electrode material layer and the electrolytic solution containing an interface passivator, the interface passivator being a compound including an element E, and the element E being selected from lithium, sodium, beryllium, magnesium, potassium, calcium, aluminum, gallium, or germanium; and

ii) performing at least one cycle of charging and discharging on the uncycled secondary battery to form an A-D-E ternary layer to obtain the secondary battery, where A is selected from alkali metal elements and is different from E, and D is silicon or carbon.

The secondary battery having the ternary passivation layer on the surface of the negative electrode material layer can be obtained with the above method, such that the resistance, cycle life and storage performance of the secondary battery can be improved.

In an embodiment, the interface passivator is selected from at least one of compounds of beryllium, magnesium, calcium, aluminum, or gallium. Optionally, the interface passivator is selected from at least one of compounds of beryllium, magnesium, calcium, or aluminium. The above interface passivator is selected to effectively form the ternary layer, thereby improving the cycle, storage, and other performance of the secondary battery.

In an embodiment, the interface passivator is selected from at least one of: a substituted or unsubstituted $C_{1-20}$ carboxylic acid salt, the substituent being selected from one or more of $C_{1-6}$ alkyl, $C_{2-6}$ cycloalkyl, hydroxyl, amino, oxo group, acyl, $C_{1-6}$ alkylthio, phenyl, benzoylthio, phenylthio, and phenoxy; imino acid salt; enoate; phosphate; sulfate; sulfonimide salt; sulfonate; benzoate; phthalate; acetylacetonate; inorganic oxyacid salt; or double salt containing at least two non-transition metal cations. The above interface passivator is selected to prepare a secondary battery having significantly improved resistance, cycle life and storage performance.

In an embodiment, in step i), the interface passivator is blended into at least one of the positive electrode material layer, the negative electrode material layer, or the electrolytic solution. The blending makes the ternary layer more easily formed, such that the performance of the secondary battery can be further improved.

A fourth aspect of the present disclosure provides a battery module including the secondary batteries of the first and second aspects of the present disclosure or the secondary battery prepared by the method of the third aspect of the present disclosure.

A fifth aspect of the present disclosure provides a battery pack including the battery module of the fourth aspect of the present disclosure.

A sixth aspect of the present disclosure provides a powered device including at least one selected from the secondary batteries of the first and second aspects of the present disclosure, the secondary battery obtained by the method of the third aspect, the battery module of the fourth aspect, or the battery pack of the fifth aspect.

The secondary battery of the present disclosure and the secondary battery obtained by the preparation method of the present disclosure have balanced cycle performance and storage performance, and lower internal resistance.

**BRIEF DESCRIPTION OF DRAWINGS**

FIG. 1 is a schematic view of a secondary battery according to an embodiment of the present disclosure.
FIG. 2 is an exploded view of the secondary battery according to the embodiment of the present disclosure shown in FIG. 1.
FIG. 3 is a schematic view of a battery module according to an embodiment of the present disclosure.
FIG. 4 is a schematic view of a battery pack according to an embodiment of the present disclosure.
FIG. 5 is an exploded view of the battery pack according to the embodiment of the present disclosure shown in FIG. 4.
FIG. 6 is a schematic view of a powered device using the secondary battery as a power source according to an embodiment of the present disclosure.

Reference numerals:

1 battery pack; 2 upper box body; 3 lower box body; 4 battery module; 5 secondary battery; 51 housing; 52 electrode assembly; 53 top cover assembly

DESCRIPTION OF EMBODIMENTS

Embodiments of a secondary battery, a battery module, a battery pack and a powered device of the present disclosure are described in detail below with reference to the accompanying drawings. However, unnecessary detailed description may be omitted. For example, a detailed description of well-known items and a repeated description of an actually same structure are omitted. This is to avoid unnecessarily lengthy of the following description, thereby making it convenient for those skilled in the art to understand. In addition, the accompany drawings and the following description are provided to make those skilled in the art to fully understand the present disclosure, which is not intended to limit the subject matter recited in the claims thereto.

A "range" disclosed herein is defined in a form of a lower limit and an upper limit, and a given range is defined by selecting a lower limit and an upper limit, while the selected lower limit and upper limit define a boundary of a particular range. The range defined in this manner may include or do not include an end value and may be arbitrarily combined, that is, any lower limit may be combined with any upper limit to form a range. For example, if ranges of 60 to 120 and 80 to 110 are listed for a particular parameter, it is understood that ranges of 60 to 110 and 80 to 120 are also expected. Further, if minimum range values 1 and 2 are listed and maximum range values 3, 4, and 5 are listed, ranges of 1 to 3, 1 to 4, 1 to 5, 2 to 3, 2 to 4, and 2 to 5 may all be expected. In the present disclosure, unless otherwise stated, a numerical range "a to b" means an abbreviated representation of a combination of any real numbers between a to b, where a and b are both real numbers. For example, a numerical range "0 to 5" means that all real numbers between "0 and 5" are all listed herein, and "0 to 5" is merely an abbreviated representation of combinations of these numbers. In addition, when it is expressed that a certain parameter is an integer which is ≥ 2, it is equivalent to disclosing that the parameter is, for example, an integer 2, 3, 4, 5, 6, 7, 8, 9, 10, 11, 12, or the like.

If not specifically stated, all embodiments and optional embodiments of the present disclosure may be combined with each other to form a new technical solution.

If not specifically stated, all technical features and optional technical features of the present disclosure may be combined with each other to form a new technical solution.

If not specifically stated, all steps of the present disclosure may be performed sequentially or may be performed randomly, preferably sequentially. For example, the method includes steps (a) and (b), indicating that the method may include steps (a) and (b) performed sequentially or may include steps (b) and (a) performed sequentially. For example, the method may further include a step (c), indicating that the step (c) may be added to the method in any order, for example, the method may include steps (a), (b), and (c), or it may include steps (a), (c), and (b), or it may include steps (c), (a), and (b).

If not specifically stated, "include and "comprise" mentioned in the present disclosure represent an open type or may be a closed type. For example, the "include" and "comprise" may indicate that other un-listed components can be further included or comprised, or only listed components are included or comprised.

If not specifically stated, a term "or" is inclusive in the present disclosure. For example, a phrase "A or B" means "A, B, or both A and B". More specifically, the condition "A or B" is satisfied by either of the following conditions: A is true (or present) and B is false (or not present); A is false (or not present) and B is true (or present); or both A and B are true (or present).

With the wide application of electric vehicles (EVs) and hybrid electric vehicles (HEVs), people pay more attention to the service time and use cost of vehicles. Therefore, the cycle life of the secondary battery, which is an energy storage device for vehicles, naturally becomes one of the performance concerned in the field. It is desirable that the secondary battery has good cycle performance and long battery life. This not only reduces the use cost of the user, but also means less resource consumption.

The solid electrolyte interface (SEI) membrane on the surface of the electrode plate plays an important role in improving the cycle performance of the secondary battery. The formation of an SEI membrane consumes the electrolyte (or electrolyte ions, i.e. reactive ions or charge carrier ions, in the electrolyte). Thus, if the SEI membrane is repeatedly broken and regenerated in a cycle, the transport kinetics of active ions is reduced, and it may even lead to electrolyte depletion and performance decreasing of battery cell.

However, the commonly used active materials of the positive and negative electrodes undergo various changes in volume during cycling, which affects the integrity and stability of the SEI layer, thereby degrading battery performance. These problems are particularly significant for the silicon-based active material of the negative electrode, which undergoes significant volume change, e.g., the rate of change is 100%-300%.

The field pursues SEI membrane layers that can accommodate material volume changes and maintain integrity. To this end, additives are typically added to the electrolyte or cover the active material or a surface of the electrode plate. However, the SEI layers obtained by these methods do not adapt well to material volume changes and therefore do not significantly improve battery performance. To sum up, the existing methods cannot effectively solve the interface problem caused by the volume change of materials.

In addition, the challenge is in the careful balance of cycle performance and storage performance. It is known in the art that good storage performance and long cycle life have different or even opposite requirements for SEI membranes. A relatively flexible and thin SEI has beneficial cycle life, because it accommodates volume changes of the negative electrode material, consumes less during repeated formation, and has a low interface resistance. However, a non-porous and strong SEI has beneficial storage life, which prevents electrolyte permeation and current leakage. However, during cycling, such thick and poorly flexible SEI may break upon volume changes of the negative electrode material and consume additional electrolyte, and may also affect ion transfer, resulting in relatively low initial capacity and slightly poor rate performance.

However, a desired secondary battery in this field should have good overall performance, that is, good cycle performance and storage performance.

An object of the present disclosure is to provide a secondary battery having balanced overall performance, i.e., good cycle performance and storage performance. Another object of the present disclosure is to provide a preparation method of the secondary battery. The secondary battery of the present disclosure has good overall performance, i.e., less internal resistance of the battery, longer cycle life, and better storage performance after multiple cycles.

Hereinafter, a secondary battery, a battery module, a battery pack and a powered device of the present disclosure will be described with reference to the accompanying drawings.

## Secondary Battery and Preparation Method thereof

In an embodiment of the present disclosure, the present disclosure provides a secondary battery, which includes a negative electrode plate including a negative electrode material layer, a positive electrode plate including a positive electrode material layer, and an electrolytic solution. At least one of the negative electrode material layer, the positive electrode material layer, and the electrolytic solution includes an interface passivator. The interface passivator is a compound containing an element E selected from lithium, sodium, beryllium, magnesium, potassium, calcium, aluminum, gallium, or germanium. Without being limited by any theory, an interface passivator is contained in at least one of the positive electrode material layer, the electrolytic solution, and the negative electrode material layer, such that during at least one charge after fresh preparation, the secondary battery has a beneficial ternary layer when active ions are embedded in the negative electrode material, thereby improving performance of the electrode plate and battery.

Herein, the active ion may be a lithium ion or a sodium ion based on the type of the secondary battery. In other words, the active ion of the lithium ion secondary battery is lithium ion, and the active ion of the sodium ion secondary battery is sodium ion.

In some embodiments, a surface of the negative electrode material layer has an A-D-E ternary layer, in which A is selected from an alkali metal element and is different from E, and D is silicon or carbon. The A-D-E ternary layer is formed by the action of the interface passivator on the surface of the negative electrode material layer during at least one charge of the secondary battery. The secondary battery of the present disclosure has a ternary layer on the surface of the negative electrode material layer thereof, and the ternary layer can stabilize the negative electrode interface and accommodate volume change, thereby improving the performance of the electrode plate and the battery and particularly achieving strict balance of cyclic performance and storage performance. As the number of charge and discharge cycles increases, the advantages of the secondary battery of the present disclosure are further enhanced, particularly with significantly reduced battery impedance and improved cycle life and storage performance of the battery, e.g., increased capacity retention rate particularly after cycling and storage at a relatively high temperature.

The term "ternary layer" and similar expressions are used interchangeably throughout this description to denote the same or similar meanings.

In some embodiments, the secondary battery is a lithium ion secondary battery or a sodium ion secondary battery. In this case, the interface passivator or the ternary layer of the present disclosure can significantly improve cycle performance, impedance and the like of the battery. In some embodiments, the secondary battery is a lithium ion secondary battery.

In some embodiments, the interface passivator is a compound of a non-transition metal with an atomic number not greater than 20. Such a compound may be an organic or inorganic compound. The inventors have found that, particularly in a lithium ion secondary battery, a compound of a metal element with an atomic number not greater than 20 is desirable as an interface passivator. In particular, it is desirable to select a compound of a metal having a lower activity than the active ions of the secondary battery as an interface passivator. Without being limited by theory, such interface passivator is prone to generate electrons in the electrochemical reaction and thus is prone to form ternary layers. In contrast, it is difficult for transition metal compounds to achieve performance improvement in some cases. This may be due to more vacant orbitals in the transition metal atoms, which is not conducive to the formation of ternary layer and may aggravate the interface reaction.

As used herein, the term "transition metal" has a well-known meaning, and refers to the metal elements of the d-block and ds-block of the Periodic Table of the Elements. The d-block elements include elements of Groups IIIB to VIIB and VIII of the Periodic System, excluding the lanthanides and actinides. The ds-block includes elements of Groups IB to IIB of the Periodic Table.

In some embodiments, the metal cation part of the interface passivator has a valence of 2 to 5. In some embodiments, the interface passivator may be selected from at least one of compounds of lithium, sodium, beryllium, magnesium, potassium, calcium, aluminum, gallium, or germanium, and optionally, at least one of compounds of beryllium, magnesium, potassium, calcium, aluminum, gallium, or germanium.

In some embodiments, the interface passivator is selected from at least one of compounds of beryllium, magnesium, calcium, aluminum, and gallium. Optionally, the interface passivator is selected from at least one of compounds of beryllium, magnesium, calcium, or aluminium. The effect of the interface passivation layer can be further improved by selecting the compound containing the above metal elements, thereby improving the performance of the secondary battery more effectively.

In some embodiments, the interface passivator is selected from combinations of two or three of compounds of magnesium, aluminium, and calcium. The internal resistance and cycle and storage performance of the battery can be further improved by employing such combinations of the interface passivators.

In some embodiments, the interface passivator is selected from at least one of: a substituted or unsubstituted $C_{1-20}$ carboxylic acid salt, of which the substituent is selected from one or more of $C_{1-6}$ alkyl, $C_{2-6}$ cycloalkyl, hydroxyl, amino, oxo group, acyl, $C_{1-6}$ alkylthio, phenyl, benzoylthio, phenylthio, and phenoxy; imino acid salt; enoate; phosphate; sulfate; sulfonimide salt; sulfonates; benzoate; phthalate; acetylacetonate; inorganic oxyacid salt; or double salt containing at least two non-transition metal cations.

In some embodiments, optionally, the interface passivator is selected from at least one of calcium propionate, calcium stearate, calcium acetate, calcium cyclohexane butyrate, calcium formate, calcium DL-malate, calcium glycolate, calcium 3-methyl-2-oxobutyrate, calcium levulinate, calcium 2-ethylhexanoate, calcium 2-hydroxy-4-(methylthio) butyrate, calcium DL-glycerate, aluminum stearate, aluminum monostearate, basic aluminum acetate, aluminum terephthalate, aluminum acetate, aluminum oxalate, aluminum distearate, aluminum lactate, magnesium stearate, magnesium lactate, magnesium oxalate, magnesium acetate, magnesium citrate, magnesium valproate, magnesium 2-ethylhexanoate, magnesium 2-ethylbutyrate, magnesium phenoxyacetate, calcium bis(nonafluorobutyl sulfonyl) imide, calcium bis(fluorosulfonyl) imide, calcium bis(trifluoromethyl sulfonyl) imide, magnesium bis(trifluoromethane sulfonyl) imide, calcium methanesulfonate, calcium 2, 5-dihydroxybenzene sulfonate, calcium triflate, calcium oxybenzene sulfonate, magnesium triflate, aluminum tris(trifluorosulfonate), calcium benzoate, calcium phthalate, calcium 4-aminosalicylate, calcium acetylacetonate, calcium hexafluoro acetylacetonate, beryllium acetylacetonate, magnesium acetylacetonate, magnesium bis(2, 4-pentanedionate), magnesium trifluoro acetylacetonate, magnesium hexafluoro acetylacetonate, aluminum acetylacetonate, aluminum tris(trifluoro-2, 4-pentanedionate), calcium metaborate, calcium nitrate, aluminum metaphosphate, aluminum perchlorate, aluminum dihydrogen phosphate, aluminum hypophosphite, aluminum phosphate, magnesium perchlorate, magnesium metaborate, magnesium nitrate, beryllium sulfate, calcium aluminate, triethylaluminum, trioctylaluminum, tri-n-butylaluminum, dimethylaluminum isopropoxide, trihexadecyl aluminum, magnesiumocene, di-n-butylmagnesium, n-butylethylmagnesium, bis(ethylcyclopentadienyl) magnesium, bis(pentamethylcyclopentenyl) magnesium, bis(cyclopentadienyl) magnesium, bis(n-propylcyclopentadienyl) magnesium, bis(ethylcyclopentadienyl) magnesium, beryllium bis(2-(2-hydroxyphenyl) pyridine), calcium bis(pentamethylcyclopentadienyl) tetrahydrofuran, aluminum isopropoxide, aluminum ethoxide, aluminum tri-tert-butanolate, aluminum sec-butoxide, aluminum n-butoxide, aluminum sec-butoxide, aluminum hydroxy bis(2-ethylhexanoate), magnesium methoxide, magnesium ethoxide, magnesium tert-butoxide, magnesium aluminum silicate, calcium methacrylate, calcium sorbate (2, 4-hexadienoic acid), aluminum acrylate, magnesium acrylate, calcium phytate, half-calcium bis(2-ethylhexyl) phosphate, aluminum diethylphosphinate, magnesium lauryl sulfate, calcium phenylpyruvate, or calcium mesoxalate trihydrate.

In some embodiments, optionally, the interface passivator is selected from at least one of fluorosulfonimide salt, acetylacetonate salt, or inorganic oxyacid salt. In some embodiments, the inorganic oxyacid salt is selected from at least one of metaboric acid, nitric acid, metaphosphoric acid, perchloric acid, phosphoric acid, hypophosphorous acid, sulfuric acid, or aluminic acid. In some embodiments, the interface passivator is selected from at least one of fluorosulfonimide salt, acetylacetonate salt, fluoroacetoacetonate salt, nitrate salt, phosphate salt, perchlorate salt, or sulfate salt.

In some embodiments, optionally, the interface passivator is selected from at least one of calcium bis(nonafluorobutyl sulfonyl) imide, calcium nitrate, aluminum tris(trifluoro-2, 4-pentanedionate), aluminum phosphate, magnesium hexafluoro acetylacetonate, magnesium perchlorate, beryllium acetylacetonate, or beryllium sulfate.

By selecting the above interface passivator, the resistance of the secondary battery can be reduced, and strict balance of cycle life and storage performance can be achieved.

In some embodiments, the interface passivator is blended in at least one of the positive electrode material layer (or positive electrode slurry), the negative electrode material layer (or negative electrode slurry), or the electrolytic solution. The formation of the ternary layer is facilitated by adding the interface passivator directly into the battery system by means of blending.

As used herein, "blending" means that the interface passivator is directly doped to be spread (or dispersed) in the slurry or electrolytic solution. The blending does not include coating.

In some embodiments, the A-D-E ternary layer is selected from Li-Si-Ca ternary layer, Li-Si-Mg ternary layer, Li-Si-Be ternary layer, Li-Si-Al ternary layer, Li-C-Ca ternary layer, Li-C-Mg ternary layer, Li-C-Be ternary layer, Li-C-Al ternary layer, Na-Si-Ca ternary layer, Na-Si-Mg ternary layer, Na-Si-Be ternary layer, Na-Si-Al ternary layer, Na-C-Ca ternary layer, Na-C-Mg ternary layer, Na-C-Be ternary layer, Na-C-Al ternary layer and combinations thereof. In an embodiment, optionally, the A-D-E ternary layer is selected from Li-Si-Ca ternary layer, Li-Si-Mg ternary layer, Li-Si-Be ternary layer, Li-Si-Al ternary layer, Na-Si-Ca ternary layer, Na-Si-Mg ternary layer, Na-Si-Be ternary layer, Na-Si-Al ternary layer and combinations thereof. The secondary battery includes the above ternary interface passivation layer and thus can effectively improve impedance, cycle life, and storage performance of the battery.

In some embodiments, the ternary layer is formed by the interaction of the interface passivator at the surface of the negative electrode material during at least one charge cycle of the secondary battery. In some embodiments, the ternary layer is formed during one to three charging cycles of the secondary battery, optionally one or two charging cycles of the secondary battery, and further optionally one charging cycle of the secondary battery.

In some embodiments, before the at least one charge, the positive electrode material layer includes the interface passivator of 0.001 wt% to 20 wt%, optionally 1 wt% to 10 wt%, based on the total weight of the positive electrode material layer.

In some embodiments, before the at least one charge, the negative electrode material layer includes the interface passivator of 0.001 wt% to 20 wt%, optionally 0.05 wt% to 5 wt%, based on the total weight of the negative electrode material layer.

In some embodiments, before the at least one charge, the electrolytic solution includes the interface passivator of 0.001 wt% to 20 wt%, optionally 0.1 wt% to 5 wt%, based on the total weight of the electrolytic solution. In some embodiments, optionally, before the at least one charge, the electrolytic solution includes the interface passivator of 0.2 wt% to 5 wt%, optionally 0.3 wt% to 5 wt%, based on the total weight of the electrolytic solution.

The battery performance can be further improved by controlling the content of the passivator within the above range. If the content is too low, an effective ternary interface passivation layer cannot be formed. If the content is too high, a ternary phase may also be formed in the bulk phase of the electrode plate material layer, which reduces the energy density of the battery cell.

In some embodiments, it may be advantageous to provide the interface passivator in the negative electrode material layer. In this case, the interface passivator is added in a small amount, thereby reducing the influence on the electrolyte composition or performance while achieving the intended purpose.

In some embodiments, the negative electrode active material layer includes a silicon-based negative electrode active material or a carbon-based negative electrode active material. In particular, in some embodiments, the negative electrode material layer includes a silicon-based negative electrode active material. The benefit of incorporating the ternary layer of the present disclosure in the secondary battery is particularly significant where negative electrode materials with large volume changes are used. In the case where the negative electrode material layer includes a silicon-based negative electrode material or even consists of a silicon-based negative electrode active material, it is particularly advantageous to incorporate the interface passivator of the present disclosure in the secondary battery system.

In some embodiments, the negative electrode active material has D50 of 1 $\mu$m to 20 $\mu$m, optionally 2 $\mu$m to 10 $\mu$m. With the material having the above D50, the interface passivation effect of the ternary layer of the present disclosure can be effectively exerted, so that the performance of the secondary battery is significantly improved, and the ease of preparation of the electrode plate and the performance superiority are balanced. The use of the material with D50 in the above range can avoid excessive interface activity caused by an excessive specific surface area of the material, which is beneficial to effectively achieve the desired performance improvement of the interface passivation layer. Further, the inhibition of active ion migration can be avoided, which is beneficial to the improvement of the overall performance of the battery.

In some embodiments, the negative electrode active material has a Span value of 0.9 to 1.8, optionally 0.9 to 1.2, where

$$Span = \frac{D90\text{-}D10}{D50}$$

.

D90, D10 and D50 denote corresponding particle sizes at a cumulative distribution percentage of 90%, 10%, and 50%, respectively. Herein, the units of D90, D10 and D50 are $\mu$m. The negative electrode active material with the Span value in the above range is selected so that the material has the relative interface stability, which contributes to the achievement of the battery performance improvement effect.

Herein, "Span value" denotes a particle size distribution width of a material. The Span value is a dimensionless quantity as defined above. The negative electrode material with the Span value in the above range is selected such that the material has the relative interface stability, which contributes to the achievement of the battery performance improvement effect.

In some embodiments, the negative electrode active material has a D50 of 1 $\mu$m-20 $\mu$m and a Span value of 0.9-1.8. In other embodiments, the negative electrode active material preferably has a D50 of 3 $\mu$m-10 $\mu$m and a Span value of 0.9-1.2.

A second aspect of the present disclosure provides a secondary battery prepared by the steps of:

> i) providing a negative electrode plate including a negative electrode material layer, a positive electrode plate including a positive electrode material layer, and an electrolytic solution to produce an uncycled secondary battery, wherein at least one of the negative electrode material layer, the positive electrode material layer, and the electrolytic solution includes an interface passivator, and the interface passivator is a compound containing an element E selected from lithium, sodium, beryllium, magnesium, potassium, calcium, aluminum, gallium, or germanium; and
> ii) performing at least one cycle of charging and discharging on the uncycled secondary battery.

A third aspect of the present disclosure provides a preparation method of a secondary battery, which includes the steps of:

> i) providing a negative electrode plate including a negative electrode material layer, a positive electrode plate including a positive electrode material layer, and an electrolytic solution to produce an uncycled secondary battery, wherein at least one of the negative electrode material layer, the positive electrode material layer, and the electrolytic solution includes an interface passivator, and the interface passivator is a compound containing an element E selected from lithium, sodium, beryllium, magnesium, potassium, calcium, aluminum, gallium, or germanium;

ii) performing at least one cycle of charging and discharging on the uncycled secondary battery to form an A-D-E ternary layer to obtain the secondary battery, where A is selected from alkali metal elements and is different from E, and D is silicon or carbon.

The resulting secondary battery prepared by the above method is a secondary battery including a ternary passivation layer provided on the surface of the negative electrode material layer, which has improved impedance, cycle life, and storage performance.

In some embodiments, step i) includes step a) of providing positive electrode slurry, negative electrode slurry, and an electrolytic solution, and an interface passivator is blended with at least one of the positive electrode slurry, the negative electrode slurry, and the electrolytic solution.

In some embodiments, step i) includes step b) of coating the positive electrode slurry and the negative electrode slurry respectively on at least one surface of a positive electrode current collector and a negative electrode current collector to obtain a positive electrode plate and a negative electrode plate, and assembling the positive electrode plate, the negative electrode slurry, and the electrolytic solution into the uncycled secondary battery.

Without being limited by theory, in the case where the negative electrode plate material layer contains an interface passivator, the interface passivator reacts directly on the negative electrode plate material layer to form a ternary layer during the at least one cycle of charging and discharging. In the case where the positive electrode plate material layer and/or the electrolytic solution contains an interface passivator, the interface passivator migrates to the surface of the negative electrode plate material layer under the action of a voltage during the at least one cycle of charging and discharging, and forms a ternary layer. For example, the interface passivator, the active ions of the secondary battery and the negative electrode active material form the ternary layer under the action of the voltage. The present disclosure achieves improved battery performance by forming a ternary layer on the surface of the negative electrode plate material layer.

In some embodiments, the at least one cycle of charging and discharging of step ii) is performed at a voltage of 3 V to 4.3 V

In some embodiments, step ii) is a formation step.

Herein, the term "formation" has a meaning well known in the art and generally means that a freshly prepared secondary battery is subjected to a first charge, during which intercalation and deintercalation of lithium ions occur to activate the negative electrode active material and form a passivation layer, for example, a solid electrolyte interface membrane (SEI membrane), on the surface of the negative electrode material layer.

In some embodiments, the interface passivator is selected from at least one of compounds of beryllium, magnesium, calcium, aluminum, or gallium. In an embodiment, the interface passivator is selected from at least one of compounds of beryllium, magnesium, calcium, or aluminium.

In some embodiments, before the at least one charging, the positive electrode material layer contains an interface passivator of 0.001 wt% to 20 wt%, optionally 1 wt% to 10 wt%, based on the total weight of the positive electrode material layer.

In some embodiments, before the at least one charging, the negative electrode material layer contains an interface passivator of 0.001 wt% to 20 wt%, optionally 0.05 wt% to 5 wt%, based on the total weight of the negative electrode material layer.

In some embodiments, before the at least one charging, the electrolytic solution contains an interface passivator of 0.001 wt% to 20 wt%, optionally 0.1 wt% to 5 wt%, based on the total weight of the electrolytic solution.

In some embodiments, the interface passivator is added to the positive electrode plate material slurry, the negative electrode plate material slurry, or the electrolytic solution by blending or mixing.

The positive electrode material slurry includes a positive electrode active material, an interface passivator, a solvent, and optional additives. In some embodiments, the positive electrode material slurry contains an interface passivator of 0.001 wt% to 20 wt%, optionally 1 wt% to 10 wt%, based on a dry weight of the positive electrode material slurry.

The negative electrode material slurry includes a negative electrode active material, an interface passivator, a solvent, and optional additives. In some embodiments, the negative electrode material slurry contains an interface passivator of 0.001 wt% to 20 wt%, optionally 0.05 wt% to 5 wt%, based on a dry weight of the negative electrode material slurry.

With the interface passivator in the above content range, a ternary layer can be effectively formed on the surface of the negative electrode plate material layer, thereby passivating and protecting the interface to achieve the effect of improving the performance of the secondary battery.

In some embodiments, the negative electrode slurry includes a negative electrode active material. The negative electrode active material includes a silicon-based negative electrode active material or a carbon-based negative electrode active material. In particular, in some embodiments, the negative electrode slurry includes a silicon-based negative electrode active material. The benefits of the interface passivator and the ternary layer formed thereby of the present disclosure are particularly pronounced in the case of negative electrode active materials with large volume changes.

In addition, components other than the interface passivator in the respective constituent parts of the secondary battery are described below.

[Positive Electrode Plate]

The positive electrode plate includes a positive electrode current collector and a positive electrode material layer disposed on at least one surface of the positive electrode current collector, and the positive electrode material layer includes a positive electrode active material.

As an example, the positive electrode current collector has two surfaces opposite to each other in a thickness direction thereof, and the positive electrode film layer is disposed on any one or both of the two opposite surfaces of the positive electrode current collector.

In some embodiments, the positive electrode current collector may be a metal foil or a composite current collector. For example, the metal foil is an aluminum foil. The composite current collector may include a macromolecular material base-layer and a metal layer formed on at least one surface of the macromolecular material base-layer. The composite current collector may be formed by forming a metal material (such as, aluminum, aluminum alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

In some embodiments, the positive electrode active material is a positive electrode active material for a battery known in the art. As an example, the positive electrode active material includes at least one of lithium-containing phosphate of an olivine structure, lithium transition metal oxide, or respective modified compounds thereof. However, the present disclosure is not limited to these materials, and other traditional materials that may be used as positive electrode active materials of the battery may be used. These positive electrode active materials may be used alone or in combinations of two or more. Examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$, which may be referred to as $NCM_{333}$), $LiNi_{0.5}Co_{0.2}Mn_{0.3}O_2$ (which may be referred to as $NCM_{523}$), $LiNi_{0.5}Co_{0.25}Mn_{0.25}O_2$ (which may be referred to as $NCM_{211}$), $LiNi_{0.6}Co_{0.2}Mno_{0.2}O_2$ (which may be referred to as $NCM_{622}$), $LiNi_{0.8}Co_{0.1}Mn_{0.1}O_2$ (which may be referred to as $NCM_{811}$), lithium nickel cobalt aluminum oxide (e.g., $LiNi_{0.85}Co_{0.15}Al_{0.05}O_2$), or modified compound thereof. Examples of the lithium-containing phosphate of olivine structure may include, but are not limited to, at least one of lithium iron phosphate (such as $LiFePO_4$, which may be referred to as LFP), a composite material of lithium iron phosphate and carbon, lithium manganese phosphate (such as $LiMnPO_4$), a composite material of lithium manganese phosphate and carbon, lithium iron manganese phosphate, or a composite material of lithium iron manganese phosphate and carbon.

In the secondary battery of the present disclosure, optionally, the positive electrode active material is selected from materials in which the battery active ions (e.g., lithium ions, sodium ions, or potassium ions) have a volume change during intercalation and deintercalation processes and/or the material interface has a catalytic effect on the electrolytic solution. In some embodiments, the positive electrode active material is selected from one or more of lithium iron phosphate (LFP), lithium iron manganese phosphate (LFMP), lithium cobalt oxide, lithium nickel oxide, lithium manganese oxide, lithium nickel manganese oxide, lithium nickel cobalt manganese oxide, lithium nickel cobalt aluminium oxide, lithium-rich material, sodium oxygen compound or potassium oxygen compound, and compounds obtained by adding other metals to the above compounds. The other metal is selected from one or more of transition metals and/or non-transition metals other than beryllium, magnesium, calcium, and aluminum. However, those skilled in the art will recognize that the present disclosure is not limited to these materials.

In some embodiments, the positive electrode film layer further optionally includes a binding agent. The kind and content of the binding agent are not particularly limited and may be selected according to practical requirements. As an example, the binding agent may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode film layer further optionally includes a conductive agent. The kind and content of the conductive agent are not particularly limited and may be selected according to practical requirements. As an example, the conductive agent may include at least one of superconducting carbon, acetylene black, carbon black, Ketjen black, carbon dots, carbon nanotubes, graphene, or carbon nanofibers.

In some embodiments, the positive electrode plate is prepared by the conventional ways below. The above components for preparing the positive electrode plate, such as the positive electrode active material, the conductive agent, the binding agent and any other components, are dispersed in a solvent (e.g., N-methylpyrrolidone) to form positive electrode slurry. The positive electrode slurry is then coated on the positive electrode current collector, and the positive electrode plate is obtained after drying, cold pressing and other processes.

[Negative Electrode Plate]

The negative electrode plate includes a negative electrode current collector and a negative electrode material layer provided on at least one surface of the negative electrode current collector, and the negative electrode material layer includes a negative electrode active material.

As an example, the negative electrode current collector has two surfaces opposite to each other in a thickness direction thereof, and the negative electrode film layer is disposed on any one or both of the two opposite surfaces of the negative electrode current collector.

In some embodiments, the negative electrode current collector may be a metal foil or a composite current collector. For example, the metal foil is a copper foil. The composite current collector may include a macromolecular material base-layer and a metal layer formed on at least one surface of the macromolecular material base-material. The composite current collector may be formed by forming a metal material (such as, copper, copper alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

In some embodiments, the negative electrode active material may be a negative electrode active material for a battery known in the art. As an example, the negative electrode active material may include at least one of artificial graphite, natural graphite, soft carbon, hard carbon, silicon-based material, tin-based material, or lithium titanate. The silicon-based material may be selected from one or more of elemental silicon, silicon-oxygen compound, silicon-carbon composite, silicon-nitrogen compound, and silicon alloy. The tin-based material may be selected from one or more of elemental tin, tin oxide compound, and tin alloy. However, the present disclosure is not limited to these materials, and other traditional materials that may be used as the negative electrode active materials of the battery may be used. These negative electrode active materials may be used alone or in combinations of two or more.

In the secondary battery of the present disclosure, optionally, the negative electrode active material is selected from materials in which the battery active ions (e.g., lithium ions, sodium ions, or potassium ions) have a volume change during intercalation and deintercalation processes and/or the material interface has a catalytic effect on the electrolytic solution. In some embodiments, the negative electrode active material is selected from a silicon-based negative electrode material or a carbon-based negative electrode material. In some embodiments, optionally, the negative electrode active material is selected from one or more of graphite, soft carbon, hard carbon, mesocarbon microbeads, carbon fibers, carbon nanotubes, elemental silicon, silicon-oxygen compounds, silicon-carbon composites, and compounds obtained by adding other metals to the above materials. The other metal is selected from one or more of transition metals and/or non-transition metals other than beryllium, magnesium, calcium, and aluminum. However, those skilled in the art will recognize that the present disclosure is not limited to these materials.

In some embodiments, the negative electrode active material is selected from silicon-based negative electrode materials. In some embodiments, the negative electrode active material is selected from one or more of elemental silicon, silicon-oxygen compounds, and silicon-carbon composites.

In some embodiments, the negative electrode film layer further optionally includes a binding agent. The kind and content of the binding agent are not particularly limited and may be selected according to practical requirements. The binding agent may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The kind and content of the conductive agent are not particularly limited and may be selected according to practical requirements. The conductive agent may be selected from one or more of superconducting carbon, acetylene black, carbon black, Ketjen black, carbon dots, carbon nanotubes, graphene, and carbon nanofibers.

In some embodiments, the negative electrode film layer may optionally include other additives, such as a thickening agent, e.g., sodium carboxymethyl cellulose (CMC-Na).

In some embodiments, the negative electrode plate is prepared as follows. The above components for preparing the negative electrode plate, such as the negative electrode active material, the conductive agent, the binding agent and any other components, are dispersed in a solvent (for example, deionized water) to form negative electrode slurry. The negative electrode slurry is then coated on the negative electrode current collector, and the negative electrode plate is obtained after drying, cold pressing and other processes.

[Electrolyte]

The electrolyte acts as conductive ions between the positive electrode plate and the negative electrode plate.

The present disclosure has no specific limitation on the type of the electrolyte, which can be selected according to requirements. For example, common electrolytes in the field may be liquid, gel, or all-solid. In the present disclosure, the electrolyte is mainly liquid electrolyte.

In some embodiments, the electrolyte is electrolytic solution. The electrolytic solution mainly includes electrolyte salt and a solvent.

In the present disclosure, the kind of the electrolyte salt is not particularly limited and can be selected according to practical requirements. In some embodiments, the electrolyte salt may be selected from at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bis(trifluoromethane sulfonimide) (LiTFSI), lithium trifluoromethane sulfonate ($LiCF_3SO_3$), lithium difluorophosphate, lithium difluoro(oxalate) borate, lithium bis(oxalate) borate (LiBOB), lithium difluorooxalato phosphate, lithium tetrafluorooxalato phosphate, and $LiN(C_xF_{2x}+1SO_2)(C_yF_{2y}+1SO_2)$ (where x, y are natural numbers). The above description is merely an example of the electrolyte salt used in the lithium ion secondary battery, but the present disclosure is not limited thereto. In the case of a secondary battery having other active ions, the secondary battery employs corresponding electrolyte salt, which is not particularly limited and may be selected according to practical requirements.

In the present disclosure, the kind of the organic solvent of the electrolytic solution is not particularly limited, and may be selected according to practical requirements. In some embodiments, the organic solvent may include one or more of chain carbonate, cyclic carbonate, carboxylic acid ester, and ether. The types of the chain carbonate, cyclic carbonate, carboxylic acid ester and ether are not particularly limited in the present disclosure, and may be selected according to practical requirements. In some embodiments, the organic solvent may optionally include one or more of diethyl carbonate, dipropyl carbonate, ethyl methyl carbonate, methyl propyl carbonate, ethyl propyl carbonate, ethylene carbonate, propylene carbonate, butylene carbonate, γ-butyrolactone, methyl formate, ethyl acetate, propyl acetate, methyl propionate, ethyl propionate, tetrahydrofuran, dimethyl ether, diethyl ether, and ethylene glycol dimethyl ether.

In some embodiments, the electrolytic solution further optionally includes an additive. For example, the additive may include a negative electrode film-forming additive and a positive electrode film-forming additive, and may further include additives capable of improving performance of the battery, such as additives for improving overcharge performance of the battery and additives for improving high-temperature or low-temperature performance of the battery.

In some embodiments, the additive of the electrolytic solution is selected from at least one of cyclic carbonate compound containing an unsaturated bond, halogen-substituted cyclic carbonate compound, sulfate compound, sulfite compound, sultones compound, disulfonic acid compound, nitrile compound, aromatic compound, isocyanate compound, phosphonitrile compound, cyclic anhydride compound, phosphite compound, phosphate compound, borate compound, or carboxylate compound.

[Isolation Film]

In some embodiments, the secondary battery further includes an isolation film. The type of the isolation film is not particularly limited in the present disclosure, and may be any well-known isolation film with a porous structure that has good chemical stability and mechanical stability.

In some embodiments, a material of the isolation film may be selected from at least one of glass fiber, non-woven fabric, polyethylene, polypropylene, and polyvinylidene fluoride. The isolation film may be a single-layer film or may be a multilayer composite film, which is not particularly limited. When the isolation film is a multilayer composite film, materials of the layers may be the same or different, which is not particularly limited.

In some embodiments, the positive electrode plate, the negative electrode plate and the isolation film is made into an electrode assembly by means of a winding process or a lamination process.

In some embodiments, the secondary battery may include an outer package. The outer package is configured to package the above electrode assembly and the electrolyte.

In some embodiments, the outer package of the secondary battery may be a hard housing, such as a hard plastic housing, an aluminum housing, and a steel housing. The outer package of the secondary battery may be a soft package, such as a bag-type soft package. A material of the soft package may be plastic, such as polypropylene, polybutylene terephthalate, and polybutylene succinate.

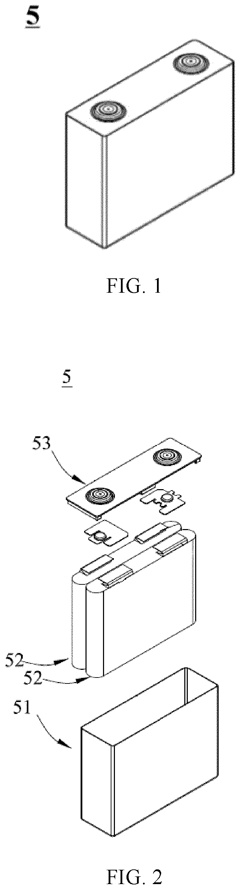

The shape of the secondary battery is not particularly limited in the present disclosure, and may be cylindrical, square, or any other shape. For example, FIG. 1 illustrates a secondary battery 5 having a square structure as an example.

In some embodiments, referring to FIG. 2, the outer package includes a casing 51 and a cover plate 53. The casing 51 includes a bottom plate and a side plate connected to the bottom plate, and the bottom plate and the side plate enclose an accommodating cavity. The casing 51 has an opening in communication with the accommodating cavity, and the cover plate 53 can cover the opening to enclose the accommodating cavity. The positive electrode plate, the negative electrode plate and the isolation film forms an electrode assembly 52 through a winding process or a lamination process. The electrode assembly 52 is enclosed in the accommodating cavity. The electrolyte is immersed in the electrode assembly 52. The secondary battery 5 may include one or more electrode assemblies 52, and those skilled in the art can select according to specific actual requirements.

In some embodiments, the secondary battery may be assembled into a battery module, and the battery module may include one or more secondary batteries, the specific number of which can be selected by those skilled in the art according to the application and a capacity of the battery module.

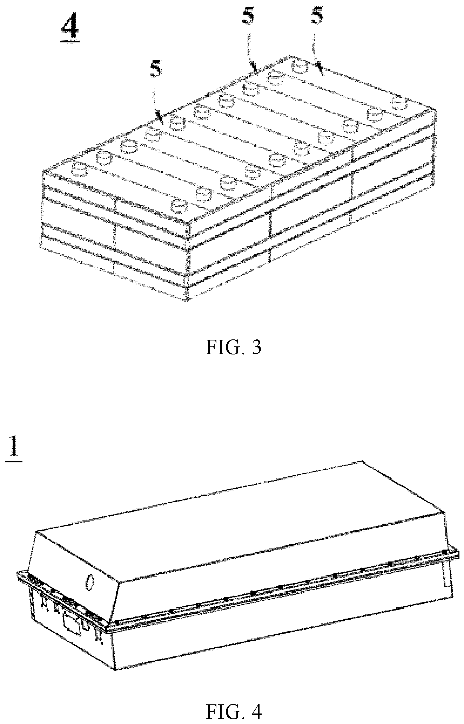

FIG. 3 illustrates a battery module 4 as an example. Referring to FIG. 3, a plurality of secondary batteries 5 of the battery module 4 is sequentially arranged along a length direction of the battery module 4. Alternatively, the secondary batteries may be arranged in any other manner. The plurality of secondary batteries 5 can be further fixed by fasteners.

Optionally, the battery module 4 may further include a shell having an accommodating space, and the plurality of secondary batteries 5 is accommodated in the accommodating space.

In some embodiments, the above battery modules may be assembled into a battery pack, and the number of the battery modules contained in the battery pack may be one or more, specific number of which can be selected by those skilled in the art according to the application and capacity of the battery pack.

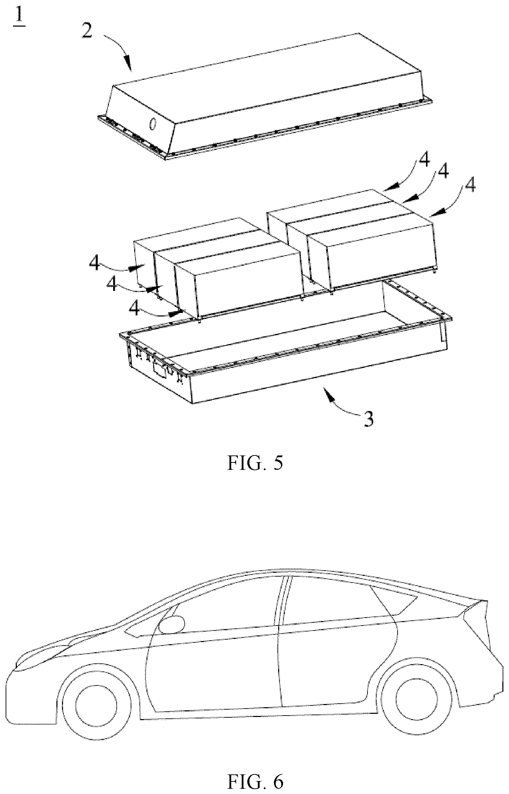

FIG. 4 and FIG. 5 show a battery pack 1 as an example. Referring to FIG. 4 and FIG. 5, the battery pack 1 includes a battery box and a plurality of battery modules 4 provided in the battery box. The battery box includes an upper box body 2 and a lower box body 3, and the upper box body 2 can cover the lower box body 3 to form a closed space for accommodating the battery module 4. The plurality of battery modules 4 may be arranged in the battery box in any manner.

In addition, the present disclosure further provides a powered device, and the powered device includes at least one of the secondary battery, the battery module, or the battery pack according to the present disclosure. The secondary battery, the battery module or the battery pack may be used as a power supply for the powered device, or may be used as an energy storage unit of the powered device. The powered device may include a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electrical train, a ship, a satellite, an energy storage system and the like, but it is not limited thereto.

The powered device may select the secondary battery, the battery module, or the battery pack according to use requirements thereof.

FIG. 6 illustrates a powered device as an example. The powered device is a pure electric vehicle, a hybrid electric vehicle, a plug-in hybrid electric vehicle and the like. In order to meet requirements of the powered device for high power and high energy density of the secondary battery, a battery pack or a battery module can be adopted.

As another example, a device may be a mobile phone, a tablet computer, a notebook computer and the like. The device is usually required to be light and thin, and the secondary battery can be used as a power supply.

**Embodiments**

Hereinafter, embodiments of the present disclosure will be described. The embodiments described below are exemplary and are intended to be illustrative of the present disclosure and are not to be construed as limitation on the present disclosure. Specific techniques or conditions, which are not specified in the embodiments, are carried out in accordance with techniques or conditions described in literature in the art or in accordance with a specification of a product. The reagents or instruments used without any indication of manufacturers are conventional products available commercially.

The secondary batteries of the embodiments of the present disclosure and comparative examples are prepared by the following methods.

1. Preparation of Positive Electrode Plate

The positive electrode active material, the conductive agent of acetylene black and the binding agent of polyvinylidene fluoride (PVDF) are dissolved in the solvent N-methyl pyrrolidone (NMP) at a weight ratio of 90: 5: 5 according to the following Table 1, to which (if any) the interface passivator of the present disclosure is added, stirred thoroughly, and mixed uniformly to obtain positive electrode slurry. After that, the positive electrode slurry is coated uniformly on the positive electrode current collector of aluminum foil at a load of 0.2 mg/mm$^2$, and then dried, cold-pressed, and cut into the positive electrode plate of 57000 mm$^2$.

In each of the tables below, in the case where the positive electrode material layer or the negative electrode material layer contains the interface passivator, the content of the interface passivator is a weight percentage (wt%) based on the respective dry weight of the positive electrode material layer or the negative electrode material layer. In the case where electrolytic solution contains an interface passivator, the content of the interface passivator is in weight percent based on the total weight of the electrolytic solution.

Table 1

| | Positive Electrode Active Material | Interface Passivator | Interface Passivator Content |
|---|---|---|---|
| LFP Positive Electrode | lithium iron phosphate (LFP) | - | - |
| Ni0 Positive Electrode | $LiNi_{0.8}Co_{0.1}Mn_{0.1}O_2$ (NCM811) | - | - |
| Ni1 Positive Electrode | NCM811 | beryllium acetylacetonate | 5wt% |
| Ni2 Positive Electrode | NCM811 | nickel acetylacetonate | 5wt% |
| Ni3 Positive Electrode | NCM811 | beryllium acetylacetonate | 0.005wt% |
| Ni4 Positive Electrode | NCM811 | beryllium acetylacetonate | 1wt% |
| Ni5 Positive Electrode | NCM811 | beryllium acetylacetonate | 10wt% |
| Ni6 Positive Electrode | NCM811 | beryllium acetylacetonate | 15wt% |
| Ni7 Positive Electrode | NCM811 | beryllium acetylacetonate | 20wt% |

2. Preparation of Negative Electrode Plate

The negative electrode active material, the conductive agent of acetylene black, the binding agent of styrene-butadiene rubber (SBR) and the thickener of sodium carboxymethyl cellulose (CMC) are dissolved in the solvent of deionized water at a weight ratio of 90: 4: 4: 2 according to the following Table 2, to which (if any) the interface passivator of the present disclosure is added, stirred thoroughly, and mixed uniformly to obtain negative electrode slurry. After that, the negative electrode slurry is coated uniformly on the negative electrode current collector of copper foil at a load of 0.12 mg/mm² one or more times, and dried, cold-pressed and cut into a negative electrode plate of 60000 mm².

Table 2

| | Negative Electrode Active Material | Interface Passivator | Interface Passivator Content | D50/$\mu$m | Span |
|---|---|---|---|---|---|
| C Negative Electrode | artificial graphite | - | - | - | - |
| Si0 Negative Electrode | silicon-carbon composite material | - | - | 1.5 | 1 |
| Si1 Negative Electrode | silicon-carbon composite material | calcium bis(nonafluorobu tyl sulfonyl) imide | 1wt% | 1.5 | 1 |
| Si2 Negative Electrode | silicon-carbon composite material | magnesium perchlorate | 0.5wt% | 1.5 | 1 |
| Si3 Negative Electrode | silicon-carbon composite material | cobalt sulfamate | 1wt% | 1.5 | 1 |
| Si4 Negative Electrode | silicon-carbon composite material clad with aluminum phosphate | - | - | 1.5 | 1 |
| Si5 Negative Electrode | silicon-carbon composite material | calcium bis(nonafluorobu tyl sulfonyl) imide/magnesiu m perchlorate * | 0.5wt%/1. 5wt% | 1.5 | 1 |

(continued)

|  | Negative Electrode Active Material | Interface Passivator | Interface Passivator Content | D50/$\mu$m | Span |
|---|---|---|---|---|---|
| Si6 Negative Electrode | silicon-carbon composite material | magnesium perchlorate | 0.005wt% | 1.5 | 1 |
| Si7 Negative Electrode | silicon-carbon composite material | magnesium perchlorate | 1wt% | 1.5 | 1 |
| Si8 Negative Electrode | silicon-carbon composite material | magnesium perchlorate | 5wt% | 1.5 | 1 |
| Si9 Negative Electrode | silicon-carbon composite material | magnesium perchlorate | 10wt% | 1.5 | 1 |
| Si10 Negative Electrode | silicon-carbon composite material | magnesium perchlorate | 20wt% | 1.5 | 1 |
| Si11 Negative Electrode | silicon-carbon composite material | magnesium perchlorate | 0.5wt% | 1 | 1 |
| Si12 Negative Electrode | silicon-carbon composite material | magnesium perchlorate | 0.5wt% | 10 | 1 |
| Si13 Negative Electrode | silicon-carbon composite material | magnesium perchlorate | 0.5wt% | 20 | 1 |
| Si14 Negative Electrode | silicon-carbon composite material | magnesium perchlorate | 0.5wt% | 1.5 | 0.9 |
| Si15 Negative Electrode | silicon-carbon composite material | magnesium perchlorate | 0.5wt% | 1.5 | 1.8 |

* Herein, "/" means "and", that is "calcium bis(nonafluorobutyl sulfonyl) imide/magnesium perchlorate" means "calcium bis(nonafluorobutyl sulfonyl) imide and magnesium perchlorate". Similar expressions have the same meanings hereinafter.

3. Preparation of Electrolytic Solution

According to Table 3 below, in an argon atmosphere ($H_2O$<0.1ppm, $O_2$<0.1ppm) glove box, the organic solvents ethylene carbonate (EC) and ethyl methyl carbonate (EMC) are mixed uniformly at a volume ratio of 3/7. 12.5 wt% of lithium hexafluorophosphate ($LiPF_6$) is added to the mixed organic solvent and dissolved as an electrolyte salt, 1 wt % of 1, 3-propane sultone (PS), 0.5 wt% of ethylene sulfate (DTD), 0.5 wt% of vinylene carbonate (VC) and 2 wt% of fluoroethylene carbonate (FEC) are added as additives, and if any, the interface passivator of the present disclosure is then added and stirred uniformly to obtain an electrolytic solution. All weight percentages are based on the total weight of the electrolytic solution.

Table 3

| | Interface Passivator | Interface Passivator Content |
|---|---|---|
| EL0 Electrolytic Solution | - | - |
| EL1 Electrolytic Solution | magnesium hexafluoro acetylacetonate | 1 wt% |
| EL2 Electrolytic Solution | aluminum tris(trifluoro-2, 4-pentanedionate) | 2 wt% |
| EL3 Electrolytic Solution | manganese bis(trifluoromethane sulfonyl) imide | 1 wt% |
| EL4 Electrolytic Solution | magnesium hexafluoro acetylacetonate/aluminum tris (trifluoro-2, 4-pentanedionate) | 1 wt%/1 wt% |
| EL5 Electrolytic Solution | magnesium hexafluoro acetylacetonate | 0.005 wt% |
| EL6 Electrolytic Solution | magnesium hexafluoro acetylacetonate | 0.3 wt% |
| EL7 Electrolytic Solution | magnesium hexafluoro acetylacetonate | 5 wt% |
| EL8 Electrolytic Solution | magnesium hexafluoro acetylacetonate | 10 wt% |
| EL9 Electrolytic Solution | magnesium hexafluoro acetylacetonate | 20 wt% |

4. Preparation of Secondary Battery

(1) As shown in the following Table 4, the positive electrode plate, the isolation film and the negative electrode plate are stacked in sequence, such that the isolation film is located between the positive and negative electrode plates and closely adhered thereto to isolate them, and then the above components are wound to obtain an electrode assembly. The electrode assembly is placed in the battery casing, dried, and injected with an electrolytic solution in an amount of 2.4 g/Ah to obtain a freshly prepared secondary battery.

(2) The secondary battery is subjected to formation. Specifically, the secondary battery is subjected to closed atmospheric pressure formation at a formation temperature of 45 °C, a current of 0.1 C, and a voltage of 3-4.3 V and then standing, to obtain the secondary batteries of the examples of the present disclosure and the comparative examples.

Table 4

| Serial Number | Positive Electrode Plate | Negative Electrode Plate | Electrolytic Solution |
|---|---|---|---|
| Comparative Example 1 | LFP positive electrode | Si0 negative electrode | EL0 electrolytic solution |
| Comparative Example 2 | Ni0 positive electrode | Si0 negative electrode | EL0 electrolytic solution |
| Embodiment 1 | LFP positive electrode | Si1 negative electrode | EL0 electrolytic solution |
| Embodiment 2 | LFP positive electrode | Si2 negative electrode | EL0 electrolytic solution |
| Embodiment 3 | LFP positive electrode | Si3 negative electrode | EL0 electrolytic solution |
| Embodiment 4 | LFP positive electrode | Si0 negative electrode | EL1 electrolytic solution |
| Embodiment 5 | LFP positive electrode | Si0 negative electrode | EL2 electrolytic solution |
| Embodiment 6 | LFP positive electrode | Si0 negative electrode | EL3 electrolytic solution |
| Embodiment 7 | Ni0 positive electrode | Si1 negative electrode | EL0 electrolytic solution |
| Embodiment 8 | Ni0 positive electrode | Si2 negative electrode | EL0 electrolytic solution |
| Embodiment 9 | Ni0 positive electrode | Si3 negative electrode | EL0 electrolytic solution |
| Embodiment 10 | Ni0 positive electrode | Si0 negative electrode | EL1 electrolytic solution |
| Embodiment 11 | Ni0 positive electrode | Si0 negative electrode | EL2 electrolytic solution |
| Embodiment 12 | Ni0 positive electrode | Si0 negative electrode | EL3 electrolytic solution |

(continued)

| Serial Number | Positive Electrode Plate | Negative Electrode Plate | Electrolytic Solution |
|---|---|---|---|
| Embodiment 13 | Ni1 positive electrode | Si0 negative electrode | EL0 electrolytic solution |
| Embodiment 14 | Ni2 positive electrode | Si0 negative electrode | EL0 electrolytic solution |
| Embodiment 15 | Ni1 positive electrode | Si1 negative electrode | EL0 electrolytic solution |
| Embodiment 16 | Ni1 positive electrode | Si2 negative electrode | EL0 electrolytic solution |
| Embodiment 17 | Ni1 positive electrode | Si3 negative electrode | EL0 electrolytic solution |
| Embodiment 18 | Ni1 positive electrode | Si0 negative electrode | EL1 electrolytic solution |
| Embodiment 19 | Ni1 positive electrode | Si0 negative electrode | EL2 electrolytic solution |
| Embodiment 20 | Ni1 positive electrode | Si0 negative electrode | EL3 electrolytic solution |
| Embodiment 21 | Ni1 positive electrode | Si1 negative electrode | EL1 electrolytic solution |
| Embodiment 22 | Ni1 positive electrode | Si1 negative electrode | EL2 electrolytic solution |
| Embodiment 23 | Ni1 positive electrode | Si1 negative electrode | EL3 electrolytic |
| Embodiment 24 | Ni1 positive electrode | Si3 negative electrode | EL1 electrolytic solution |
| Embodiment 25 | Ni1 positive electrode | Si3 negative electrode | EL2 electrolytic solution |
| Embodiment 26 | Ni1 positive electrode | Si3 negative electrode | EL3 electrolytic solution |
| Embodiment 27 | Ni2 positive electrode | Si3 negative electrode | EL3 electrolytic solution |
| Embodiment 28 | Ni0 positive electrode | Si4 negative electrode | EL0 electrolytic solution |
| Embodiment 29 | Ni0 positive electrode | Si5 negative electrode | EL0 electrolytic solution |
| Embodiment 30 | Ni0 positive electrode | Si0 negative electrode | EL4 electrolytic solution |
| Embodiment 31 | Ni3 positive electrode | Si0 negative electrode | EL0 electrolytic solution |
| Embodiment 32 | Ni4 positive electrode | Si0 negative electrode | EL0 electrolytic solution |
| Embodiment 33 | Ni5 positive electrode | Si0 negative electrode | EL0 electrolytic solution |
| Embodiment 34 | Ni6 positive electrode | Si0 negative electrode | EL0 electrolytic solution |
| Embodiment 35 | Ni7 positive electrode | Si0 negative electrode | EL0 electrolytic solution |
| Embodiment 36 | Ni0 positive electrode | Si6 negative electrode | EL0 electrolytic solution |
| Embodiment 37 | Ni0 positive electrode | Si7 negative electrode | EL0 electrolytic solution |
| Embodiment 38 | Ni0 positive electrode | Si8 negative electrode | EL0 electrolytic solution |
| Embodiment 39 | Ni0 positive electrode | Si9 negative electrode | EL0 electrolytic solution |
| Embodiment 40 | Ni0 positive electrode | Si10 negative electrode | EL0 electrolytic solution |
| Embodiment 41 | Ni0 positive electrode | Si11 negative electrode | EL0 electrolytic solution |
| Embodiment 42 | Ni0 positive electrode | Si12 negative electrode | EL0 electrolytic solution |
| Embodiment 43 | Ni0 positive electrode | Si13 negative electrode | EL0 electrolytic solution |
| Embodiment 44 | Ni0 positive electrode | Si 4 negative electrode | EL0 electrolytic solution |
| Embodiment 45 | Ni0 positive electrode | Si15 negative electrode | EL0 electrolytic solution |
| Embodiment 46 | Ni0 positive electrode | Si0 negative electrode | EL5 electrolytic solution |
| Embodiment 47 | Ni0 positive electrode | Si0 negative electrode | EL6 electrolytic solution |
| Embodiment 48 | Ni0 positive electrode | Si0 negative electrode | EL7 electrolytic solution |
| Embodiment 49 | Ni0 positive electrode | Si0 negative electrode | EL8 electrolytic solution |
| Embodiment 50 | Ni0 positive electrode | Si0 negative electrode | EL9 electrolytic solution |

5. Test

5.1 Detection of Ternary Layer

The ternary layer can be detected by conventional means in the field, such as solid-state nuclear magnetic resonance, X-ray powder diffraction (XRD), X-ray electron energy spectroscopy (XPS), Raman spectroscopy, and a combination thereof.

5.2 Internal Resistance of Initial Secondary Battery and Internal Resistance of Secondary Battery after 1000 cycles

(1) The secondary battery prepared as described above (hereinafter, referred to as "fresh battery") is charged to 4.3 V with a constant current of 1 C at 45 °C, and then charged at a constant voltage of 4.3 V until the current is less than 0.05 C. After that, the lithium ion battery is discharged to 3.0 V at a constant current of 1 C. The above process is one charging and discharging process, i.e., one cycle. This cycle is repeated for 1000 cycles to obtain a secondary battery with 1000 cycles at 45 °C (hereinafter, referred to as "battery with 1000 cycles at 45 °C").
(2) At 25 °C, the fresh battery and the battery with 1000 cycles at 45 °C as described above are both charged to 4.3 V at a constant current of 1 C, then charged at a constant voltage of 4.3 V until the current is less than 0.05 C, and thereafter discharged for 30min at 1 C. That is, the capacity of the secondary battery is adjusted to 50% of state of charge (SOC) of the battery. After that, the positive and negative pens of TH2523A AC internal resistance tester (Tonghui Electronics) are in contact with the positive and negative electrodes of two tested secondary batteries, respectively. The internal resistance tester reads internal resistance values of the batteries, and recorded them as the internal resistance of the initial secondary battery and the internal resistance of the secondary battery after 1000 cycles, respectively.

5.3 Capacity Retention Rate after 1000 Cycles at 45 °C

The test is performed by Wuhan LAND. At 45 °C, the secondary battery is charged to 4.3 V at a constant current of 1 C, and then charged at a constant voltage of 4.3 V until the current is less than 0.05 C, and thereafter the lithium ion battery is discharged to 3.0 V at the constant current of 1 C. The above process is one charging and discharging process, i.e., one cycle or a first cycle, and the discharging capacity of the first cycle is recorded. This process is repeated for 1000 cycles, and the discharging capacity of the 1000th cycle is recorded. The capacity retention rate of the 1000th cycle of the secondary battery is calculated according to the following formula:

capacity retention rate (%) of a lithium ion battery after 1000 cycles at 45 °C = (discharging capacity of the 1000th cycle/discharging capacity of the first cycle) × 100%.

5.4 Capacity Retention Rate after Storage for 300 Days at 60 °C

At 25 °C, the lithium ion battery is charged to a voltage of 4.3 V at a constant current of 1 C, then charged at a constant voltage of 4.3 V until the current is 0.05 C, and thereafter discharged to 3.0 V at a constant current of 1 C. The above process is one charging and discharging process, i.e., one cycle or a first cycle. At this point the discharging capacity of the first cycle of the secondary battery is tested. The above fully charged secondary battery is then stored for 300 days in a thermostat at 60 °C, and the discharge capacity after the storage for 300 days is measured, where capacity retention rate (%) of the lithium ion battery after storage for 300 days at 60 °C = (discharging capacity after storage for 300 days/discharging capacity for the first cycle) × 100%.

The test results are recorded in Tables 5-9 below.

Table 5

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Comparative Example 1 | 870 | 1049 | 28 | 26 |
| Embodiment 1 | 781 | 1001 | 51 | 41 |
| Embodiment 2 | 796 | 1023 | 46 | 38 |
| Embodiment 3 | 1013 | 1315 | 15 | 13 |
| Embodiment 4 | 789 | 1011 | 49 | 39 |
| Embodiment 5 | 799 | 1025 | 47 | 38 |
| Embodiment 6 | 1021 | 1319 | 15 | 14 |

As can be seen from the previous table, in comparative example 1, the secondary battery in which the positive electrode active material is LFP and the negative electrode active material is a silicon-carbon composite material does not contain the interface passivator of the present disclosure, and the cycle life of the secondary battery is poor. In contrast, the secondary batteries of embodiments 1-2 and 4-5 contain the interface passivator of the present disclosure, which can effectively improve the capacity retention rate, lower the battery impedance, and improve the battery performance.

Without being limited to any theory, such poor cycle life of comparative example 1 is mainly due to large volume change of the silicon-carbon composite material contained in the negative electrode during the delithiation and lithium intercalation processes in the charging and discharging cycle, resulting in the rupture and regeneration of the interface component. The interface component thickens after multiple cycles. Therefore, the secondary battery of comparative example 1 has great internal resistance after 1000 cycles. Further, consumption of active lithium due to interface disruption and regrowth also results in rapid decrease in the capacity retention rate during cycling. In addition, the capacity retention rate after storage for 300 days at 60 °C is low since the fully charged silicon-based negative electrode has high interface activity to result in excessive electrolytic solution consumption. However, since the interface passivator contained in the secondary battery of the present disclosure generates a ternary interface passivation layer at the interface between the negative electrode material layer and the electrolytic solution during the charging and discharging cycle, the reactivity of the negative electrode interface is reduced. In addition, as the number of cycles increases, the advantages of the secondary battery of the present disclosure become more prominent.

In addition, it can be seen from the data in the previous table that the secondary battery of embodiment 3 includes cobalt salt and the secondary battery of embodiment 6 includes manganese salt, which cannot achieve the beneficial effects of embodiments 1-2 and 4-5, but instead deteriorates the battery performance.

Table 6

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Comparative Example 2 | 1010 | 1329 | 14 | 11 |

(continued)

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Embodiment 7 | 901 | 1281 | 45 | 31 |
| Embodiment 8 | 921 | 1293 | 43 | 29 |
| Embodiment 9 | 1113 | 1411 | 10 | 8 |
| Embodiment 10 | 911 | 1289 | 44 | 30 |
| Embodiment 11 | 929 | 1302 | 41 | 27 |
| Embodiment 12 | 1121 | 1431 | 8 | 6 |

As can be seen from the previous table, in comparative example 2, the secondary battery in which the positive electrode active material is NCM811 and the negative electrode active material is a silicon-carbon composite material has poor cycle life. However, the secondary batteries of embodiments 7-8 with the interface passivator contained in the negative electrode material layer and the secondary batteries of embodiments 10-11 with the interface passivator contained in the electrolytic solution shows significantly improved cycle performance.

Without being limited by any theory, the secondary battery of comparative example 2 has such poor cycle life in that the volume change of the silicon-carbon material itself is significant and the structure of the NCM811 is unstable, and the migration and catalytic action of transition metal ions are one of the important influencing factors leading to interface instability.

In embodiments 7-8 and 10-11 of the present disclosure, silicon and the interface passivator of multivalent salt can form an interface passivation layer to stabilize the electrode-electrolytic solution interface. The secondary battery of the present disclosure can have significantly improved capacity retention rate, reduced secondary battery impedance, and improved secondary battery performance.

The negative electrode of embodiment 9 contains cobalt salt and the electrolytic solution of embodiment 12 contains manganese salt, which cannot improve the cycling performance.

Table 7

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Comparative Example 2 | 1010 | 1329 | 14 | 11 |
| Embodiment 13 | 991 | 1301 | 30 | 20 |
| Embodiment 14 | 1100 | 1400 | 20 | 13 |
| Embodiment 15 | 881 | 1231 | 51 | 41 |
| Embodiment 16 | 901 | 1283 | 47 | 31 |

(continued)

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Embodiment 17 | 1106 | 1401 | 17 | 13 |
| Embodiment 18 | 900 | 1271 | 49 | 37 |
| Embodiment 19 | 910 | 1291 | 47 | 25 |
| Embodiment 20 | 1117 | 1421 | 11 | 9 |

In comparative example 2, the secondary battery in which NCM811 is used as a positive electrode employs the silicon-carbon composite material without modification, and the cycle life of the secondary battery is poor.

The secondary batteries of embodiments 13, 15-16 and 18-19 contain interface passivators of calcium, magnesium, aluminum, and beryllium, which can effectively improve capacity retention rate, decrease battery resistance, and improve battery performance.

However, the salts containing nickel, cobalt and manganese in embodiments 14, 17 and 20 deteriorate the secondary battery performance.

Table 8

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Comparative Example 2 | 1010 | 1329 | 14 | 11 |
| Embodiment 21 | 801 | 1203 | 56 | 47 |
| Embodiment 22 | 871 | 1236 | 51 | 44 |
| Embodiment 23 | 1092 | 1396 | 19 | 14 |
| Embodiment 24 | 902 | 1304 | 47 | 41 |
| Embodiment 25 | 973 | 1337 | 45 | 38 |
| Embodiment 26 | 1331 | 1513 | 14 | 9 |
| Embodiment 27 | 1931 | 2314 | 3 | 1 |

In comparative example 2, the secondary battery in which the positive electrode material is NCM811 does not contain the interface passivator of the present disclosure, and the cycle life of the secondary battery is poor.

The secondary batteries of embodiments 21-22 contain organic or inorganic salts of calcium, magnesium, aluminum, and beryllium, and thus have significantly improved cycling performance. However, the secondary batteries of embodiments 23 to 27 contain salts of nickel, cobalt, and manganese, which significantly deteriorate the performance of the secondary batteries. Although cobalt contained in the negative electrode in embodiments 24 and 25 may deteriorate performance, the deterioration degree can be slightly reduced due to beryllium, magnesium or aluminum contained in the positive electrode and the electrolytic solution.

Table 9

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Comparative Example 2 | 1010 | 1329 | 14 | 11 |
| Embodiment 7 | 901 | 1281 | 45 | 31 |
| Embodiment 28 | 1001 | 1311 | 16 | 13 |
| Embodiment 29 | 798 | 1190 | 58 | 49 |
| Embodiment 30 | 821 | 1213 | 54 | 45 |

In embodiment 28, the negative electrode active material is surface-coated with aluminum phosphate, which can improve the performance of the battery as compared with comparative example 2, but the improvement is slight. The coating layer is stable in combination and is not easy to interact with the negative electrode active material to produce the ternary layer as described in the present disclosure. However, it is difficult to avoid the rupture of the interface layer after several cycles of the coating layer, and thus the performance improvement effect is very limited.

The interface passivator calcium salt is added to the negative electrode material of embodiment 7, which can significantly improve the overall performance of the secondary battery compared to comparative example 2, and the improvement is much higher than that of embodiment 28. Two kinds of multivalent salts are added to the materials of embodiments 29 and 30, which significantly improve the performance of the secondary battery as compared to the addition of one kind of multivalent salt in embodiment 7. The results show that the effect of combined additives is better than that of single salt.

Table 10

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Comparative Example 2 | 1010 | 1329 | 14 | 11 |
| Embodiment 31 | 1001 | 1320 | 16 | 13 |
| Embodiment 32 | 988 | 1307 | 23 | 20 |
| Embodiment 33 | 975 | 1294 | 30 | 27 |
| Embodiment 34 | 1008 | 1327 | 17 | 14 |

(continued)

| Serial Number | Internal Resistance of Initial Secondary Battery (mΩ) | Internal Resistance of Secondary Battery after 1000 Cycles (mΩ) | Capacity Retention Rate (%) after 1000 Cycles at 45 °C | Capacity Retention Rate after Storage for 300 Days at 60 °C |
|---|---|---|---|---|
| Embodiment 35 | 1011 | 1334 | 15 | 14 |
| Embodiment 36 | 1001 | 1333 | 28 | 27 |
| Embodiment 37 | 981 | 1313 | 37 | 34 |
| Embodiment 38 | 961 | 1293 | 38 | 33 |
| Embodiment 39 | 997 | 1305 | 21 | 20 |
| Embodiment 40 | 1010 | 1328 | 19 | 18 |
| Embodiment 41 | 900 | 1231 | 48 | 39 |
| Embodiment 42 | 896 | 1232 | 49 | 38 |
| Embodiment 43 | 900 | 1234 | 50 | 37 |
| Embodiment 44 | 899 | 1233 | 47 | 40 |
| Embodiment 45 | 897 | 1230 | 48 | 39 |
| Embodiment 46 | 988 | 1320 | 35 | 27 |
| Embodiment 47 | 968 | 1300 | 44 | 34 |
| Embodiment 48 | 948 | 1280 | 45 | 32 |
| Embodiment 49 | 984 | 1314 | 28 | 21 |
| Embodiment 50 | 1007 | 1315 | 27 | 25 |

Embodiments 31-50 explore the addition of various amounts of multivalent salt additives to the positive electrode, negative electrode, and electrolytic solution, as compared to embodiment 2. The results show that the secondary batteries of embodiments 31-50, which contain organic or inorganic salts of calcium, magnesium, aluminum, and beryllium, all have a significantly improved effect on the performance of the battery cell as compared to comparative example 2 without additive.

It should be noted that the present disclosure is not limited to the above-mentioned embodiments. The above embodiments are merely examples, and embodiments having substantially the same composition as that of technical ideas and playing the same effect in the range of the technical solution of the present disclosure are all included in the technical scope of the present disclosure. In addition, without departing from the spirit of the present disclosure, various modifications which are applied to the embodiments and can be conceived by those skilled in the art, and other manners constructed by combining part of the components in the embodiments are also included within the scope of the present disclosure.

**Claims**

1. A secondary battery, comprising:

   a negative electrode plate comprising a negative electrode material layer;
   a positive electrode plate comprising a positive electrode material layer; and
   an electrolytic solution,
   wherein at least one of the negative electrode material layer, the positive electrode material layer and the electrolytic solution contains an interface passivator, the interface passivator is a compound containing an element E, and the element E is selected from lithium, sodium, beryllium, magnesium, potassium, calcium, aluminum, gallium, or germanium.

2. The secondary battery according to claim 1, wherein a surface of the negative electrode material layer is provided with an A-D-E ternary layer, where A is selected from alkali metal elements and is different from E, and D is silicon or carbon; and
   the A-D-E ternary layer is formed by a reaction of the interface passivator on the surface of the negative electrode material layer during at least one charging of the secondary battery.

3. The secondary battery according to claim 1 or 2, wherein the interface passivator is selected from at least one of compounds of beryllium, magnesium, calcium, aluminum, or gallium;
   and optionally, the interface passivator is selected from at least one of compounds of beryllium, magnesium, calcium, or aluminium.

4. The secondary battery according to any one of claims 1 to 3, wherein the interface passivator is selected from at least one of: a substituted or unsubstituted $C_{1-20}$ carboxylic acid salt, the substituent being selected from one or more of $C_{1-6}$ alkyl, $C_{2-6}$ cycloalkyl, hydroxyl, amino, oxo group, acyl, $C_{1-6}$ alkylthio, phenyl, benzoylthio, phenylthio, and phenoxy; imino acid salt; enoate; phosphate; sulfate; sulfonimide salt; sulfonate; benzoate; phthalate; acetylacetonate; inorganic oxyacid salt; or double salt containing at least two of cations of E.

5. The secondary battery according to any one of claims 1 to 4, wherein the interface passivator is blended into at least one of the positive electrode material layer, the negative electrode material layer, or the electrolytic solution.

6. The secondary battery according to any one of claims 1 to 5, wherein the A-D-E ternary layer is selected from the group consisting of Li-Si-Ca ternary layer, Li-Si-Mg ternary layer, Li-Si-Be ternary layer, Li-Si-Al ternary layer, Li-C-Ca ternary layer, Li-C-Mg ternary layer, Li-C-Be ternary layer, Li-C-Al ternary layer, Na-Si-Ca ternary layer, Na-Si-Mg ternary layer, Na-Si-Be ternary layer, Na-Si-Al ternary layer, Na-C-Ca ternary layer, Na-C-Mg ternary layer, Na-C-Be ternary layer, Na-C-Al ternary layer and combinations thereof;
   and optionally, the A-D-E ternary layer is selected from the group consisting of Li-Si-Ca ternary layer, Li-Si-Mg ternary layer, Li-Si-Be ternary layer, Li-Si-Al ternary layer, Na-Si-Ca ternary layer, Na-Si-Mg ternary layer, Na-Si-Be ternary layer, Na-Si-Al ternary layer and combinations thereof.

7. The secondary battery according to any one of claims 2 to 6, wherein before the at least one charging, the positive electrode material layer contains the interface passivator of 0.001 wt% to 20 wt%, optionally 1 wt% to 10 wt%, based on a total weight of the positive electrode material layer.

8. The secondary battery according to any one of claims 2 to 7, wherein before the at least one charging, the negative electrode material layer contains the interface passivator of 0.001 wt% to 20 wt%, optionally 0.05 wt% to 5 wt%, based on a total weight of the negative electrode material layer.

9. The secondary battery according to any one of claims 2 to 8, wherein before the at least one charging, the electrolytic solution contains the interface passivator of 0.001 wt% to 20 wt%, optionally 0.1 wt% to 5 wt%, based on a total weight of the electrolytic solution.

10. The secondary battery according to any one of claims 1 to 9, wherein the negative electrode material layer comprises a negative electrode active material with D50 of 1 $\mu$m to 20 $\mu$m, optionally 1 $\mu$m to 10 $\mu$m.

11. The secondary battery according to any one of claims 1 to 10, wherein the negative electrode material layer comprises a negative electrode active material with a Span value of 0.9 to 1.8, optionally 0.9 to 1.2;
wherein

$$\text{Span} = \frac{\text{D90-D10}}{\text{D50}},$$

D90, D10 and D50 denote corresponding particle sizes at cumulative distribution percentages of 90%, 10%, and 50%, respectively.

12. A secondary battery, the secondary battery being prepared by steps of:

i) providing a negative electrode plate comprising a negative electrode material layer, a positive electrode plate comprising a positive electrode material layer, and an electrolytic solution to produce an uncycled secondary battery, at least one of the negative electrode material layer, the positive electrode material layer and the electrolytic solution containing an interface passivator, the interface passivator being a compound comprising an element E, and the element E being selected from lithium, sodium, beryllium, magnesium, potassium, calcium, aluminum, gallium, or germanium; and
ii) performing at least one cycle of charging and discharging on the uncycled secondary battery.

13. A preparation method of a secondary battery, comprising steps of:

i) providing a negative electrode plate comprising a negative electrode material layer, a positive electrode plate comprising a positive electrode material layer, and an electrolytic solution to produce an uncycled secondary battery, at least one of the negative electrode material layer, the positive electrode material layer and the electrolytic solution containing an interface passivator, the interface passivator being a compound comprising an element E, and the element E being selected from lithium, sodium, beryllium, magnesium, potassium, calcium, aluminum, gallium, or germanium; and
ii) performing at least one cycle of charging and discharging on the uncycled secondary battery to form an A-D-E ternary layer to obtain the secondary battery, where A is selected from alkali metal elements and is different from E, and D is silicon or carbon.

14. The preparation method according to claim 13, wherein the interface passivator is selected from at least one of compounds of beryllium, magnesium, calcium, aluminum, or gallium;
and optionally, the interface passivator is selected from at least one of compounds of beryllium, magnesium, calcium, or aluminium.

15. The preparation method according to claim 13 or 14, wherein the interface passivator is selected from at least one of: a substituted or unsubstituted $C_{1-20}$ carboxylic acid salt, the substituent being selected from one or more of $C_{1-6}$ alkyl, $C_{2-6}$ cycloalkyl, hydroxyl, amino, oxo group, acyl, $C_{1-6}$ alkylthio, phenyl, benzoylthio, phenylthio, and phenoxy; imino acid salt; enoate; phosphate; sulfate; sulfonimide salt; sulfonate; benzoate; phthalate; acetylacetonate; inorganic oxyacid salt; or double salt containing at least two non-transition metal cations.

16. The preparation method according to any one of claims 13 to 15, wherein in step i), the interface passivator is blended into at least one of the positive electrode material layer, the negative electrode material layer, or the electrolytic solution.

17. A battery module, comprising the secondary battery according to any one of claims 1 to 12 or a secondary battery formed by the preparation method according to any one of claims 13 to 16.

18. A battery pack, comprising the battery module according to claim 17.

19. A powered device, comprising at least one selected from the secondary battery according to any one of claims 1 to 12 or a secondary battery formed by the preparation method according to any one of claims 13 to 16, the battery module according to claim 17 or the battery pack according to claim 18.

**5**

FIG. 1

5

53

52

52

51

FIG. 2

**4**

5  5  5  5

FIG. 3

**1**

FIG. 4

FIG. 5

FIG. 6

## INTERNATIONAL SEARCH REPORT

| International application No. |
|---|
| **PCT/CN2022/092216** |

| A. | CLASSIFICATION OF SUBJECT MATTER |
|---|---|

H01M4/62(2006.01)i;H01M10/0567(2010.01)i;H01M10/0525(2010.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 负极, 阳极, 充电, 界面, 表面, 膜, 钝化, 添加剂, battery, negative electrode, anode, charge, interface, surface, film, passivation, additive

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114388811 A (NINGDE AMPEREX TECHNOLOGY LTD.) 22 April 2022 (2022-04-22) description, paragraphs 18-79 | 1-19 |
| X | CN 104810550 A (WANXIANG A123 SYSTEM CO., LTD. et al.) 29 July 2015 (2015-07-29) description, paragraphs 2-54 | 1-19 |
| X | JP 2006278185 A (SANYO ELECTRIC CO., LTD.) 12 October 2006 (2006-10-12) description, paragraphs 31-86, and figures 1-4 | 1-19 |
| X | JP 2015028875 A (TOYOTA MOTOR CORP.) 12 February 2015 (2015-02-12) description, paragraphs 11-60 | 1-19 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 January 2023** | **09 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/092216**

| Patent document cited in search report | | | Publication date (day/month/year) | Patent family member(s) | | | Publication date (day/month/year) |
|---|---|---|---|---|---|---|---|
| CN | 114388811 | A | 22 April 2022 | CN | 114388811 | B | 12 July 2022 |
| CN | 104810550 | A | 29 July 2015 | | None | | |
| JP | 2006278185 | A | 12 October 2006 | JP | 4739788 | B2 | 03 August 2011 |
| JP | 2015028875 | A | 12 February 2015 | JP | 6044842 | B2 | 14 December 2016 |

Form PCT/ISA/210 (patent family annex) (July 2022)